# EUROPEAN PATENT SPECIFICATION

(11) **EP 1 166 561 B1**
(45) Date of publication and mention of the grant of the patent: **02.01.2003**
(21) Application number: 00918197.5
(22) Date of filing: 21.03.2000
(51) Int. Cl.: H04N 7/173

(54) **SELECTIVELY CACHING VIDEO TO IMPROVE ON-DEMAND RESPONSE TIME**
WAHLWEISE VIDEOCACHESPEICHERUNG ZUR VERBESSERUNG VON AUF ANFRAGE ANTWORTZEIT
VIDEO A ANTEMEMOIRE SELECTIVE DESTINEE A AMELIORER LE TEMPS DE REPONSE A LA DEMANDE

(30) Priority: 23.03.1999 US 274632
(43) Date of publication of application: 02.01.2002
(73) Proprietor: Infolibria, Inc., Waltham, MA 02154 (US)
(72) Inventor: HEDDAYA, Abdelsalam, A., Lexington, MA 02420 (US); TAO, William, Y., Concord, MA 01742 (US); LEWIS, Kevin, T., Boston, MA 02109 (US); JANZEN, Stephen, P., Duxbury, MA 02332 (US)
(74) Representative: Greenwood, John David
(86) International application number: US0007450
(87) International publication number: WO00057645

(56) References cited:
- WO-A-98/00976
- US-A- 5 568 181
- US-A- 5 790 935

## Description

### FIELD OF THE INVENTION

This invention relates generally to program content delivery and in particular to a technique for selectively caching the media program content at a subscriber location.

### BACKGROUND OF THE INVENTION

During the twentieth century, continuous media services such as broadcast and cable television have become the primary vehicle for distributing entertainment, education, and other programs to the public at large. These services have traditionally used analog signaling, although emerging standards now define new formats for broadcast in digital form. In addition, devices such as cable modems are being distributed to the public to provide a mix of access to digital programming and computerized content delivery systems such as the Internet.

Increasingly, the distinctions between these two content delivery systems, those optimized for television broadcast, and those optimized for distribution of data content are blurring. For example, definitions such as the Motion Picture Experts Group (MPEG)-2 standard and other encoding schemes specify how video signals may be digitized for efficient transfer. Other efforts such as the Internet Engineering Task Force (IETF) Audio/Video Transport (AVT) working group are developing specifications for transport protocols for real time transmission of video over User Datagram Protocol (UDP) and Internet Protocol (IP) (UDP/IP) type layered networks such as the Internet. The vision is that in the future, it will not be necessary to have a television tuner within the home or at another cable subscriber site. In particular, video programs will be routinely broadcast in digital form as packetized data using UDP/IP or other packetized protocols.

Historically, the broadcast paradigm works well when the same content is delivered to all subscribers at the same time. For example, broadcast works well over analog cables for television. The same is true even for digitized content using UDP/IP or other networks. In particular, they tend to work well when the same content is sent at the same time to many places.

However, concepts have also emerged for services such as on-demand video whereby the subscriber may request delivery of a particular program as needed. Historically, such video on-demand services work well when the number of subscribers is relatively small. However, as the number of subscribers increases, the cost per subscriber typically goes up. Therefore, it is presently believed that video on-demand type services do not necessarily scale well, even in small town suburban locations.

In addition, with the growth of the Web and other activities on the Internet, it is increasingly important to find ways to manage a mix of text and visual data such as is associated with typical Web browsing activities and viewing video clips or other multimedia programs. High speed Internet connection services such as the Media One™ service support distribution of cable television signals and high speed Internet connections to the home using cable modems. These systems work by using a mixer at a centralized head end to combine the video programs and Internet access. A splitter at the subscriber site separates the television signals and routes them to a television monitor. The data signals are then routed to a computer interface.

This architecture also permits the mixing of certain content at the head end. For example, during the broadcast of a cable television program, advertising material specific to a particular municipality may be inserted. This permits a viewer in one city to see a different ad than a viewer in another city. However, this is typically implemented by manually configuring mixers at the head end. The number of subscribers receiving a particular ad is therefore typically limited to hundreds or thousands of people at a minimum.

Another problem with attempting to implement video on-demand using digitized video signals is that so many connections to a server at the head end have to be open for so long that the network infrastructure cannot handle the message traffic demand.

International Publication No. WO 98/00976, published 08 January 1998, is directed to a system and method for displaying still video images related to video content in an interactive broadcast television system. U.S. Patent No. 5,790,935 to Payton issued on August 4, 1998, is directed to the broadcasting of digital information and caching data at the site of the local subscribers to provide a virtual on-demand delivery system.

The present invention is as claimed in the claims.

The present invention is a technique for delivering on-demand content by the selective deployment of a specialized cache server. Embodiments may provide that the cache server is deployed close to the subscriber side viewing device, and accumulates data that represents the on-demand material, a packet redirector within the cache server allowing multimedia program content in the form of data packets to either be routed to the cache server for storage, or directly through the redirector straight to the client side viewing device. The cache server also permits previously cached packets to be inserted in line with packets retrieved from the cache server on the fly.

In addition, a network level cache may be employed at the head end to locally cache all, or a portion of, particular content. This allows a cache at the head end to offload a broadcast multimedia server from the certain responsibility associated with on-demand delivery of popular content. For example, a head end video server may disconnect from the subscriber much faster than would otherwise be possible, in turn reducing the size and complexity of the video server required to serve a given population.

The invention has benefits in at least three specific applications of multimedia content delivery.

First, the subscriber side redirecting cache server may be used to provide a video on-demand type service whereby the multimedia program may be broadcast from the head end at whatever time is convenient. The subscriber side cache retains a copy of the program, redirecting it to the viewing device only when the user requests it. Thus, the demand portion of the system is placed under the control of the subscriber side, thereby freeing the head end side from the complexities of having to deliver a program in real time and at precisely the time it is requested.

Second, the subscriber side redirecting cache permits integration of Web content with other broadcast content such as television programs. For example, a broadcast program such as originating from a television network may be forwarded to a head end video server for being displayed in real time. However, should the subscriber wish to switch to access the Web or overlay other material during the watching of the broadcast, the local cache may continue to cache the video program without interfering with the video server operation. This allows the user to browse the Web or other activity while the system continues to cache the broadcast program from the head end. When browsing is complete, the original broadcast program can be restarted from the exact place at which it was left off by reading it out of the cache.

Third, as a broadcast program flows through the message redirector, the message redirector and/or cache can be programmed to insert material specific to the particular subscriber. For example, the cache can be preprogrammed to store an advertisement particular to a specific subscriber based upon demographics or other behaviors of the subscriber such as a previously observed Web browsing behavior.

It can thus be seen that by using a redirecting cache as a repository for program material to be played at a later time as an adjunct to a real time broadcast video stream, a number of advantages are achieved. The cache, in effect, works as a mixer on the subscriber side allowing the insertion and/or arrangement of content at subscriber end, depending upon the subscriber's request. The packet redirector also allows the subscriber side to select either the material currently being broadcast in real time or the cached content.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.

Fig. 1 is a block diagram of an on-demand video content system making use of a subscriber side cache facility according to the invention.

Fig. 2 is a more detailed view of the cache and packet redirector as implemented at the subscriber location.

Fig. 3 is a flow diagram of the states through which the cache and subscriber side equipment pass in providing on-demand video delivery.

Fig. 4 is a flow chart of the operations which may be performed to provide integration of Web content with real time broadcast program content.

Fig. 5 is a flow chart of the operations which may be performed to insert program material specific to a particular subscriber during the viewing of a real time broadcast program.

### DETAILED DESCRIPTION OF THE INVENTION

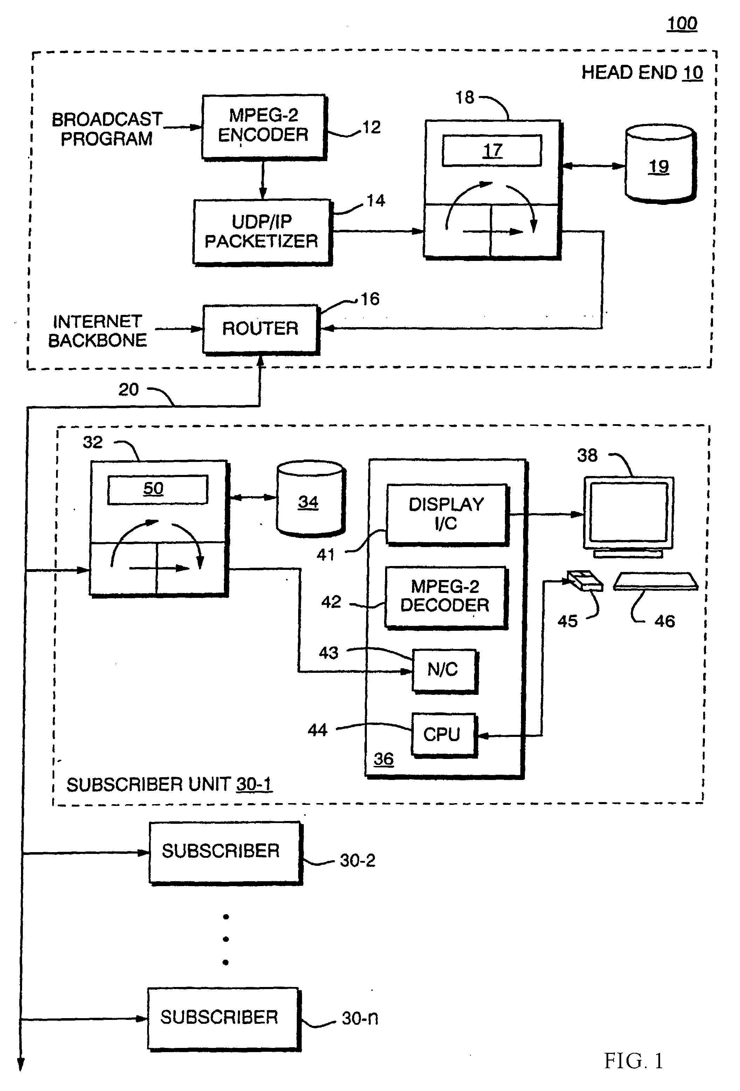

Turning attention now to Fig. 1 in particular, there is shown a program content delivery system 100 such as a cable system or telecommunications-based data network. The system 100 consists of a head end 10 which provides program content in the form of digitized data over a physical media 20 to multiple subscriber units 30-1, 30-2, ..., 30-n (collectively referred to as "the subscriber units 30"). The transmission of digitized program content is packetized in the preferred embodiment using the standard protocols for routing digital information from the head end 10 to the subscriber units 30. For example, the head end 10 takes a broadcast program and converts it using an MPEG-2 type encoder 12. The digitized program content is then formatted into packets using, for example, a User Datagram Protocol/Internet Protocol (UDP/IP) packetizer 14. The head end router 16 then accepts the packetized broadcast program content and forwards it over the physical media 20 to the subscriber units 30. The router 16 may also be connected to provide other information content services such as to an Internet Service Provider (ISP) to provide access to electronic mail, the World Wide Web, and the like.

Also deployed at the head end 10 may be a redirecting cache server 18 and associated cache storage device 19, the operation of which will be described in more detail below.

An exemplary subscriber unit 30-1 contains a redirecting cache server 32 and cache storage device 34, as well as a video server 36 and associated monitor 38. The video server 36 typically includes a display interface 41, MPEG-2 decoder 42, network interface card (NIC) 43, and a central processing unit (CPU) 44. In addition, the video server 36 may permit a user to provide input via a mouse 45 or a keyboard 46.

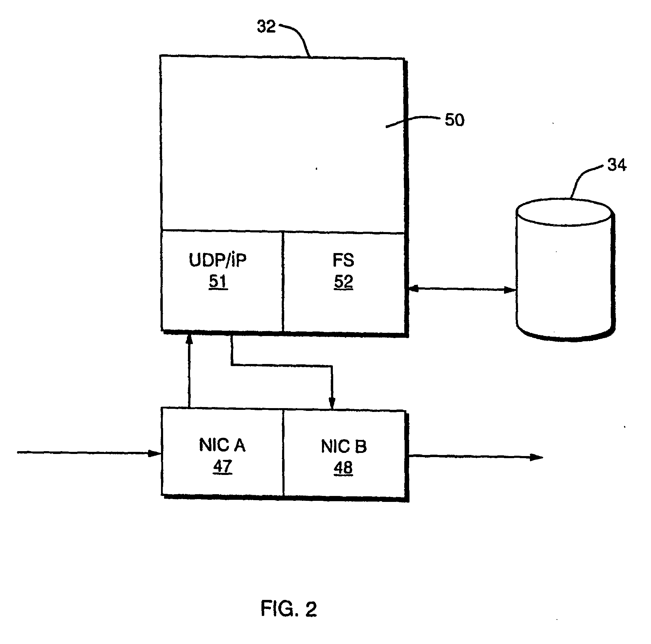

An exemplary redirecting cache server 18 or 32, shown more particularly in Fig. 2, consists of a pair of network interface cards 47, 48 and a cache controller 50. The cache controller 50 in turn includes several layers of application software, including a UDP/IP module 51 and a file server module 52.

The network interface cards 47, 48 are configurable to selectively route packets straight through the redirecting cache server 32 or up to the cache controller 50. The input side network interface card 47 thus contains packet filtering software that determines whether the packet should cause a response from a file server 52 associated with the cache storage 34.

The video server 36 receives the packets from the redirector 32 at the network interface card 43. The packets are then passed up to the MPEG-2 decoder 42 and then to the display interface 41 which, for example, contains a digital to analog converter and other video circuitry. The converted video signal is then fed to the monitor 38.

Upon receipt of packets of a particular type, the cache controller 17 or 50 may insert replacement packets that have been previously stored in its cache 19 or 34. For example, if a redirecting cache server 32 is deployed at the subscriber 30 location, the cache controller 50 may insert user specific content associated with the particular subscriber unit 30-1. Alternatively, in the case of the redirecting cache server 18 deployed at the head end, content appropriate for a particular community of subscribers 30 may be inserted. With this scenario, it is possible for the head end 10 to avoid having to store broadcast content associated with a particular subscriber or group of subscribers.

On-demand content delivery and other features can be provided at a cost which is relatively scalable as the number of subscribers 30 increases. For example, to approximate a video on-demand service, a broadcast program must first be received from a network by the head end 10 and stored in its own cache 19. Upon receipt of a request for a particular program from one of the subscriber units 30, such as by the subscriber unit 30 sending a message over the physical media 20 to a cache controller 17 located within the redirecting cache server 18 at the head end 10, the cache controller 17 enables the redirecting cache server 18 to source data packets from the cache 19 to the router 16, over the physical media 20, and down to the subscriber unit 30-1.

If, however, the cache controller 17 determines that the requested program is not available in the cache 19, the cache server 18 has the capability of communicating with the broadcast network to request delivery of a particular program. Once the broadcast network begins delivering the program, the head end cache 19 or subscriber cache 34 can be used as a buffer to receive the content at the fully offered rate by the network and offering the content to the subscriber unit 30 only when it is possible to start delivery.

The architecture also permits a solution to other problems such as overlaying or delaying of content delivery.

The system 100 also provides features such as advertisement customization, content personalization, and integration of Web content with broadcast television program delivery.

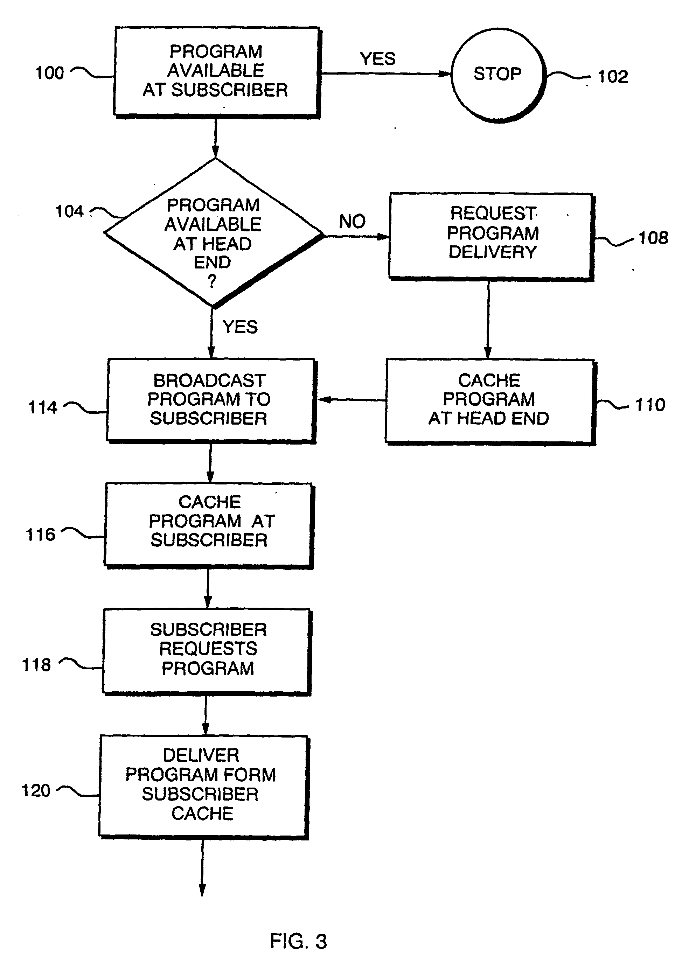

These applications will now be discussed in detail. For example, a sequence of steps performed by the system 100 to provide a video on-demand type of service are shown in Fig. 3. In a first state 100, it is determined whether the requested content is already available at the subscriber unit 30. If so, then no further delivery is required. If not, however, processing proceeds to state 104 where the cache controller 17 determines whether the program is available at the head end 10 such as is available in its cache 19. If this is not the case, then it proceeds to a state 108 in which it communicates with a network to request program delivery. Once program delivery starts in state 110, the cache controller 17 causes the program to be cached at the head end 10 such as in the cache storage 19. This can be accomplished by having the UDP/IP packetizer appropriately tag the packet so that the cache and redirector 18 can recognize packets that are to be fed to the cache 19 and not yet down to the router 16.

A state 114 is eventually reached in which the broadcast program is ready to be sent to the subscriber 30 that requested it. The packets representing the broadcast program are then fed from the cache 19 through the packet redirector 18 to the router 16 and over the physical media 20 in the direction of the subscriber units 30. The particular subscriber unit 30 that requested the program then recognizes delivery of its content and begins caching it in its own cache 34 in state 116.

It also should be recognized that these steps could be performed in anticipation of a subscriber requesting particular content so, for example, a next state 118 may be that the subscriber requests the particular program to be viewed.

Finally, in a state 120, the program can be delivered from a subscriber cache 34 directly to the video server 36 and monitor 38. A subscriber unit 30 with a relatively modest sized cache storage device 34 such as containing ten gigabytes of storage is sufficient to hold the approximately ten hours of video programming content.

The architecture avoids the need for the head end 10 to maintain many different video streams in real time. For example, a particular program selected from a menu of programs for a given day may be broadcast to the subscriber units 30 earlier in the day. When the users of the subscriber units 30 return home in the evening, they may request delivery of the video content at exactly the time they are ready to view it. Thus, a subscriber 30-1 may request that a movie begin, say at 8:00 p.m., while a subscriber 30-2 requests the same movie begin at 8:45 p.m. In this event, the subscribers 30 may request delivery of the same content at various times; however, the head end 10 need only broadcast the program content once at a common time for all subscribers 30.

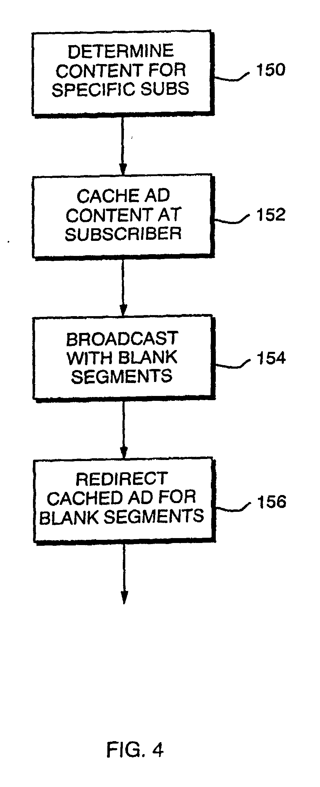

A second possible application is shown in Fig. 4. In this scenario, the cache 34 is used as a repository for program material that augments a broadcast video stream. In a first state 150, it is determined that particular content should be delivered to specific subscriber 30. In a next state 152, the advertising content is cached at the subscriber unit 30 in a manner similar to that which was previously described. However, in a state 154, broadcast program content begins transmission from the head end 10 being routed through the coder 12, packetizer 14, straight through the redirector 18, to the router 16 and physical media 20.

There are inserted in the broadcast content various blanking segments such as specially tagged packets. In state 156, this enables the caching redirector 32 at the subscriber units 30 to recognize the blank segments and insert the previously cached content from the cache 34 into the stream. The user at the subscriber unit 30 thus not only sees the broadcast program from the head end 10, but also specialized content such as directed advertising material, community messages, and the like, as inserted into the blank segments. Thus, as broadcast content flies by the caching redirector 32, different targeted material can be inserted for different subscribers 30. The material inserted is completely up to and under control of the cache controller 17, which can be determined by the previously observed Web browser behavior of the user, the user's demographics or other specific information available about the user.

It should also be understood that various combinations of the above processes may be implemented. For example, the customized advertising content described in Fig. 4 may either be video ads inserted into a broadcast program or may be Web-type ads inserted into a Web page downloaded from the Internet backbone.

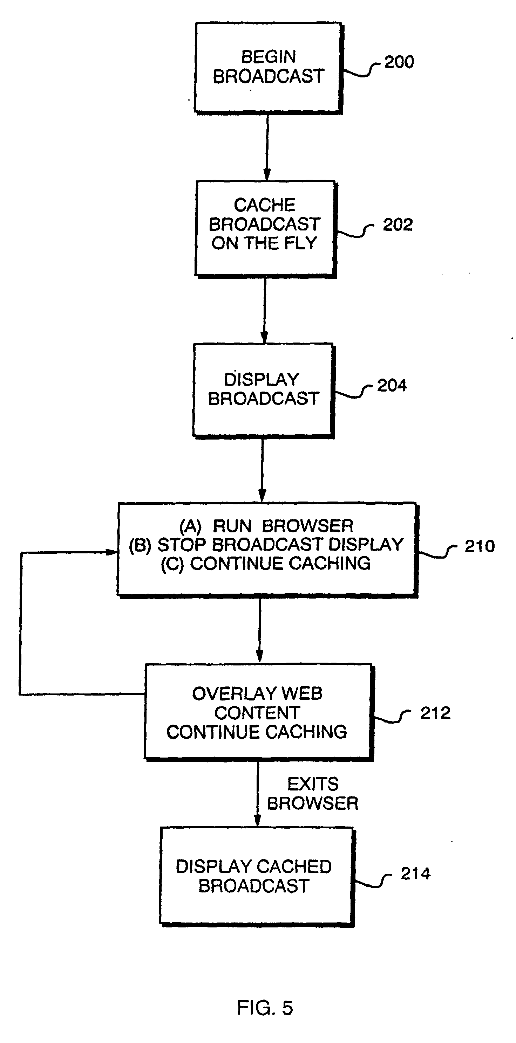

Finally, integration of broadcast program viewing and access to the Web can also be accomplished in the series of process steps as shown in Fig. 5. In a first state 200, a broadcast program is begun. In a next state 202, the broadcast program is cached by the cache redirector 32 in the local cache 34 as it is being sent. Thus, it is maintained in the cache 34 and at the same time it is forwarded to the video server 36. The broadcast program is then displayed in state 204. However, upon receipt of a request from one of the input devices 45 or 46 such as to view the contents of a Web page, a number of things occur beginning in state 210. A local browser program may be launched on the video server 36 to allow the user to view the Web content. The user may request that the broadcast program be stopped. In this case, the caching of the broadcast program is continued by the caching redirector 34, storing the broadcast program material in the cache 34. In state 212, the Web content being downloaded over the media 20 is overlaid on the display of the broadcast program on the monitor 38. The caching process for the broadcast program continues. Eventually, the user will exit the browser and, in state 214, the cached broadcast program can then continue to be viewed.

Thus, for example, a user may be viewing a documentary program such as on PBS or on the Discovery Channel on a particular topic. The broadcast program may display a Uniform Resource Locator (URL) or other identifying indicia of Web content that the user may wish to view in context. The user then indicates via inputs to the browser program that they wish to view the Web content while delaying broadcast of the broadcast program. This causes the broadcast program to continue to be cached while the user is viewing the Web content. Once the user is finished with viewing the Web, then he can pick up with viewing the broadcast program at the point at which it was left off.

The system 100 provides improved economics for on-demand multimedia delivery by selective caching being deployed at the head end in a cable system or near the point of presence in a telecom-based data network. By deploying one or two levels of caching close to the client side viewing device, the cache device accumulates data that drives the on-demand material. This allows a head end video server to disconnect from subscribers 30 much more quickly than currently available thereby reducing the size and complexity of a head end server required to service a given population.

Secondly, caches deployed at the subscriber units can locally cache all or a portion of popular content. This allows the local cache to obtain the information extremely quickly and start on-demand viewing. Thus, the local cache can also be viewed as a repository for program material to augment broadcast program material sent to a larger population. As the broadcast material is received at the subscriber unit, the cache can be selectively enabled to insert different material for different subscribers. This insertion may depend upon demographics or specifically observed behaviors such as previously observed Web browsing behaviors at the subscriber.

The redirecting cache 32 thus acts as a type of remote digital "mixer" to insert or arrange content at the subscriber end. The packet filter associated with the redirector acts as a splitter to either select the material presenting being broadcast over the physical media 20 or to select previously cached material from the cache 34.

The architecture also permits integration of Web content with broadcast television content in a manner which permits the user to trigger the caching of broadcast video program content in order to enable them to view the Web at the same time without the fear of loss of broadcast content in the meantime.

While this invention has been particularly shown and described with references to preferred embodiments thereof, it will be understood by those skilled in the art that various changes in form and details may be made therein without departing from the scope of the invention as defined by the appended claims.

## Claims

1. An apparatus for processing data messages having blank segments comprising:
a local content server (36) for converting messages to a viewable format and presenting them to a subscriber viewing device (38);
a cache storage (34) for storing messages; and
a cache server (32) comprising
a message redirector for redirecting messages by selectively passing messages to the cache storage (34) or passing messages directly to the local content server (36); and
a packet inserter for selectively inserting previously cached messages in the blank segments of messages presently being received for continuous viewing.

2. An apparatus as in claim 1 in which the messages are sent using a transport protocol.

3. An apparatus as in claim 1 in which the local content server (36) serves multimedia program content.

4. An apparatus as in claim 3 in which the message redirector redirects messages representing content to be stored in the cache storage (34) and at the same time, passes the messages to the local content server (36) for playback of the multimedia program.

5. An apparatus as in claim 3 in which the cache server (32) stores the multimedia program in progress while particular Web content is simultaneously presented to the subscriber viewing device.

6. An apparatus as in claim 3 in which the cache server (32) is disposed at a head end (10) broadcast server as a repository for multimedia program content to be delivered to multiple subscriber viewing devices.

7. An apparatus as in claim 6 wherein upon receipt of a request for broadcast program content, if the head end (10) has stored it in its cache server (18), it serves the material on-demand.

8. An apparatus as in claim 7 wherein if the head end cache server (18) does not contain the program content, it locates it elsewhere in the network and starts delivery to the subscriber viewing device upon receipt.

9. An apparatus as in claim 1 wherein the cache server (32) stores cached customized content in cache storage (34) and selectively displays such cached customized content depending upon specified user information.

10. An apparatus as in claim 1 in which the cache server (32) stores past user viewing behavior information and selects program content in response thereto.

## Patentansprüche

1. Vorrichtung zur Verarbeitung von Datennachrichten mit leeren Segmenten mit:
einem lokalen Inhaltserver (36) zum Umwandeln von Nachrichten in ein betrachtbares Format und Präsentieren derselben an eine Teilnehmerbetrachtungsvorrichtung (38),
einem Cache-Speicher (34) zum Speichern von Nachrichten; und
einem Cache-Server (32) mit:
einer Nachrichtenumleitungseinrichtung zum Umleiten von Nachrichten durch selektives Weiterleiten von Nachrichten an den Cache-Speicher (34) oder durch direktes Weiterleiten von Nachrichten an den lokalen Inhaltserver (36), und
einer Paketeinfügungseinrichtung zum selektiven Einfügen vorher zwischengespeicherter Nachrichten in die leeren Segmente von Nachrichten, die gegenwärtig zur kontinuierlichen Betrachtung empfangen werden.

2. Vorrichtung gemäß Anspruch 1, in der die Nachrichten unter Verwendung eines Transportprotokolls gesendet werden.

3. Vorrichtung gemäß Anspruch 1, in der der lokale Inhaltserver (36) einen Multimediaprogramminhalt serviert.

4. Vorrichtung gemäß Anspruch 3, in der die Nachrichtenumleitungseinrichtung Nachrichten umleitet, die in dem Cache-Speicher (34) zu speichernden Inhalt darstellen, und zur gleichen Zeit die Nachrichten an den lokalen Inhaltserver (36) zur Wiedergabe des Multimediaprogramms weiterleitet.

5. Vorrichtung gemäß Anspruch 3, in der der Cache-Server (32) das im Gange befindliche Multimediaprogramm speichert, während ein bestimmter Web-Inhalt gleichzeitig der Teilnehmerbetrachtungsvorrichtung präsentiert wird.

6. Vorrichtung gemäß Anspruch 3, in der der Cache-Server (32) an einer Kopfstelle (10) des Rundfunkservers als ein Aufbewahrungsort für Multimediaprogramminhalt angeordnet ist, der an viele Teilnehmerbetrachtungsvorrichtungen zu liefern ist.

7. Vorrichtung gemäß Anspruch 6, bei der bei Empfang einer Anforderung nach einem Rundfunkprogramminhalt, falls die Kopfstelle (10) ihn in ihrem Cache-Server (18) gespeichert hat, sie das Material auf Anfrage serviert.

8. Vorrichtung gemäß Anspruch 7, bei der, falls der Cache-Server (18) der Kopfstelle den Programminhalt nicht enthält, er ihn anderswo in dem Netzwerk lokalisiert und die Lieferung an die Teilnehmerbetrachtungsvorrichtung bei Empfang startet.

9. Vorrichtung gemäß Anspruch 1, bei der der Cache-Server (32) zwischengespeicherten kundenspezifischen Inhalt im Cache-Speicher (34) speichert und derartigen zwischengespeicherten kundenspezifischen Inhalt abhängig von spezifizierter Benutzerinformation selektiv anzeigt.

10. Vorrichtung gemäß Anspruch 1, bei der der Cache-Server (32) zurückliegende Benutzerbetrachtungs-Verhaltensinformation speichert und den Programminhalt als Antwort darauf auswählt.

## Revendications

1. Dispositif pour traiter des messages comportant des segments vides, comprenant :
un serveur de contenu local (36) pour convertir des messages en un format pouvant être observé et les présenter à un dispositif de visualisation (38) d'un abonné;
une mémoire cache (34) pour mémoriser des messages; et
un serveur cache (32) comprenant :
un dispositif de renvoi de messages pour réorienter des messages par transmission sélective de messages à la mémoire cache (34) ou par transmission de messages directement au serveur de contenu local (36); et
un dispositif d'insertion de paquets pour insérer sélectivement des messages précédemment mis en mémoire cache, dans les segments vides de messages qui sont actuellement reçus, pour une visualisation continue.

2. Dispositif selon la revendication 1, dans lequel les messages sont envoyés en utilisant un protocole de transport.

3. Dispositif selon la revendication 1, dans lequel le serveur de contenu local (36) sert un contenu de programme multimédia.

4. Dispositif selon la revendication 5, dans lequel le dispositif de renvoi de messages réoriente des messages représentant un contenu devant être mémorisé dans la mémoire cache (34) et simultanément transmet des messages au serveur de contenu local (36) pour une lecture du programme multimédia.

5. Dispositif selon la revendication 3, dans lequel le serveur cache (32) mémorise le programme multimédia en cours alors que le contenu Web particulier est présenté simultanément au dispositif de visualisation de l'abonné.

6. Dispositif selon la revendication 3, dans lequel le serveur cache (32) est disposé au niveau d'un serveur de diffusion d'une tête de réseau (10) en tant que référentiel pour le contenu de programme multimédia devant être délivré à de multiples dispositifs de visualisation d'abonnés.

7. Dispositif selon la revendication 6, dans lequel, lors de la réception d'une demande d'un contenu de programme de diffusion, si la tête de réseau (10) a mémorisé ce contenu dans son serveur cache (18), elle délivre le contenu à la demande.

8. Dispositif selon la revendication 7, dans lequel, si le serveur cache (18) de la tête de réseau ne contient pas le contenu de programme, il le localise ailleurs dans le réseau et commence la délivrance au dispositif de visualisation d'abonné lors de la réception.

9. Dispositif selon la revendication 1, dans lequel le serveur cache (32) mémorise un contenu personnalisé mis en mémoire cache dans la mémoire cache (34) et affiche sélectivement un tel contenu personnalisé mis en mémoire cache en fonction de l'information d'utilisateur spécifiée.

10. Dispositif selon la revendication 1, dans lequel le serveur cache (32) mémorise une information antérieure de comportement d'observation de l'utilisateur et sélectionne un contenu de programme en réponse à cela.
